# EUROPÄISCHE PATENTANMELDUNG

(11) **EP 4 456 389 A1**
(43) Veröffentlichungstag der Anmeldung: **30.10.2024**
(21) Anmeldenummer: 24158850.8
(22) Anmeldetag: 21.02.2024
(51) Int. Cl.: H02K 15/00, H02K 15/06

(54) **VORRICHTUNG UND VERFAHREN ZUM FIXIEREN EINER WICKLUNGSANORDNUNG**

(30) Priorität: 28.04.2023 EP 23170525
(71) Anmelder: MIBA AUTOMATION SYSTEMS GES.M.B.H., 4663 Laakirchen (AT)
(72) Erfinder: Schranzinger, Andreas, 4663 Laakirchen (AT); Eder, Jakob, 4663 Laakirchen (AT); Schifflhuber, Andreas, 4663 Laakirchen (AT)
(74) Vertreter: Harringer, Thomas

(57) **Zusammenfassung**

Die Erfindung betrifft eine Vorrichtung zum zeitweisen Fixieren einer Vielzahl von Leitelementen einer Wicklung einer elektrodynamischen Maschine, insbesondere einer Radialflussmaschine, gegen ein Blechpaket eines Stators oder Rotors, wobei das Blechpaket eine axiale Abmessung und Blechpaketnuten, die sich entlang der axialen Abmessungen erstrecken, aufweist und wobei die Blechpaketnuten zur Aufnahme einer Vielzahl dieser Leitelemente dienen, wobei die Leitelemente einen elektrisch leitfähigen Kern und eine den leitfähigen Kern umhüllende Isolierung aufweisen, wobei die Leitelemente insbesondere in der Form von Formstäben vorliegen, umfassend zumindest ein Fixierelement geeignet zum Fixieren einer Vielzahl an Leitelementen gegen die Blechpaketnuten.

## Beschreibung

Die Erfindung betrifft eine Vorrichtung und ein Verfahren zum Fixieren einer Vielzahl von Leitelementen einer Wicklung einer elektrodynamischen Maschine, insbesondere einer Radialflussmaschine, gegen ein Blechpaket eines Stators oder Rotors. Dabei weist das Blechpaket Nuten zur Aufnahme einer Vielzahl dieser Leitelemente auf. Ferner besitzen die Leitelemente einen elektrisch leitfähigen Kern und eine den leitfähigen Kern umhüllende Isolierung, wobei die Leitelemente insbesondere in der Form von Formstäben vorliegen.

Bei der Herstellung von elektrodynamischen Maschinen, beispielsweise Elektromotoren oder Generatoren, insbesondere bei solchen bei denen die Wicklung über Formstäbe realisiert wird, ist es von großer Bedeutung den Montageprozess zu vereinfachen und gleichzeitig die Qualitätsparameter zu verbessern. Dabei ergibt sich das Problem, dass im Zuge einer automatisierten Fertigung das Blechpaket samt eingefügter Leitelemente zwischen den Fertigungsstationen prozesssicher und platzsparend manipuliert werden muss. Im Zuge dieser Manipulationen sollen die, sich im Blechpaket befindlichen, Leitelemente in einer definierten Position verbleiben. Weiters können sich bei dem Prozessschritt des sogenannten Verschränkens der bereits in das Blechpaket eingefügten Leitelemente Qualitätseinbußen ergeben, wenn die Leitelemente hierbei unzureichend gegen das Blechpaket fixiert sind. Es ist dabei ebenfalls von Bedeutung, dass während dieses Fixiervorgangs die Leitelemente keine Schäden, beispielsweise in der Form von bleibenden plastischen Verformungen des elektrisch leitfähigen Kerns, erleiden.

Aus CN214544019U ist eine Vorrichtung bekannt, die sich auf eine Haarnadelmotor-Drahtformvorrichtung bezieht, die einen Statorhalter zum Anbringen eines Stators, ein Fixierelement, dass die Position des Flachdrahts definiert und ein Antriebselement zum Antreiben des Fixierelements umfasst.

Die aus dem Stand der Technik bekannte Vorrichtung weist den Nachteil auf, dass über die starre Ausführung aufgrund unterschiedlicher Toleranzen, e.g. bei den Leitelementen und/oder dem Blechpaket, vereinzelt keine ausreichende Fixierung der Leitelemente in allen Nuten erreicht werden kann, insbesondere nicht ohne dabei eine plastische Verformung der leitfähigen Kerne der Leitelemente in anderen Nuten zu verursachen.

Dabei ist bei Leitelementen, die direkt oder nur über ein Nutpapier mit den Fixierelementen in Kontakt sind, die Wahrscheinlichkeit einer Beschädigung besonders hoch.

Aus US2020195107A1 ist zudem ein Verfahren sowie eine Vorrichtung zum positionierten Halten von zumindest einer Schicht aus mehreren über den Umfang eines Blechpakets verteilt angeordneten und als Stäbe ausgebildeten Leiterelementen relativer Lage bekannt. Dazu werden alle Leiterelemente an ihren, das Blechpaket überragenden, Endabschnitten von zumindest einem in radialer Richtung verstellbaren Druckelement einer Druckvorrichtung mit einer Druckkraft beaufschlagt. Das Blechpaket wird von einer Haltevorrichtung positioniert gehalten.

Diese Vorrichtung beziehungsweise das entsprechende Verfahren weisen jedoch den Nachteil auf, dass zwei separate Vorrichtungselemente benötigt werden. Einerseits gibt es eine Haltevorrichtung zum Halten des Blechpakets, andererseits hält eine Druckvorrichtung die Leitelemente über eine Druckbeaufschlagung an den, das Blechpaket überragenden, Endabschnitten in Position. Dazu ist die Druckvorrichtung auch auf der Höhe der Endabschnitte positioniert. Dies erlaubt aufgrund des Aufbaus der Vorrichtung, aber auch aufgrund der Position der Leitelementfixierung beispielsweise keine, in den nachfolgenden Prozessschritten notwendige, Manipulation der Leitelemente selbst. Insbesondere beim Verschränken der Leitelemente ist dabei eine gute Fixierung dieser Leitelemente in den Nuten des Blechpakets vorteilhaft ist, wodurch beispielsweise ein unerwünschtes axiales Verschieben der Leitelemente verhindert werden kann. Das axiale Verschieben der Leitelemente wird dabei, unter anderem, durch beim Verschränken entstehende oder aufgebrachte axial wirkende Kräfte verursacht. Insofern ist die aus US2020195107A1 bekannte Vorrichtung nur dafür geeignet das Blechpaket mitsamt fixierter Leitelemente zu manipulieren, benötigt dazu aber zwei separate Vorrichtungselemente, was einen erhöhten Platzbedarf und komplexeren Aufbau zur Folge hat. Eine Manipulation der fixierten Leitelemente (e.g. Verschränken) ist aufgrund des Aufbaus jedoch nicht möglich oder zumindest nicht praktikabel.

Ausgehend hiervon besteht die Aufgabe der vorliegenden Erfindung darin, die Nachteile des Standes der Technik zu überwinden und eine Vorrichtung und ein Verfahren zur Verfügung zu stellen, mittels welcher/m ein Toleranzausgleich während des Fixiervorgangs möglich ist, sodass eine Fixierung der Leitelemente in allen Nuten des Blechpakets ohne eine Beschädigung der Leitelemente gewährleistet werden kann.

Damit kann die in den nachfolgenden Prozessschritten erforderliche Manipulation des Blechpakets samt fixierter Leitelemente, beziehungsweise die Manipulation der Leitelemente selbst (e.g. beim Verschränken), ohne Qualitätseinbußen erfolgen.

Die Aufgabe wird gelöst durch eine Vorrichtung mit den Merkmalen des Anspruchs 1 und einem Verfahren nach Anspruch 13.

Eine vorteilhafte Ausgestaltung der Erfindung ist eine Vorrichtung zum Fixieren einer Vielzahl von Leitelementen einer Wicklung einer elektrodynamischen Maschine, insbesondere einer Radialflussmaschine, gegen ein Blechpaket eines Stators oder Rotors, wobei das Blechpaket Blechpaketnuten zur Aufnahme einer Vielzahl dieser Leitelemente aufweist. Die Leitelemente weisen dabei einen elektrisch leitfähigen Kern und eine den leitfähigen Kern umhüllende Isolierung auf, wobei die Leitelemente insbesondere in der Form von Formstäben vorliegen. Die Vorrichtung weist dabei zumindest ein Fixierelement geeignet zum Fixieren einer Vielzahl an Leitelementen gegen die Blechpaketnuten auf. Die Vorrichtung ermöglicht dabei zum Zweck einer Fixierung der Leitelemente einen Toleranzausgleich von mindestens 0.1 mm und bis zu 1.5 mm, insbesondere von mindestens 0.2 mm bis zu 0.8 mm, ohne dass es dabei zu einer bleibenden plastischen Verformung des leitfähigen Kerns kommt.

Eine vorteilhafte Ausgestaltung der Erfindung ist eine Vorrichtung zum zeitweisen Fixieren einer Vielzahl von Leitelementen einer Wicklung einer elektrodynamischen Maschine gegen ein Blechpaket eines Stators oder Rotors. Das Blechpaket weist dabei eine axiale Abmessung und Blechpaketnuten auf. Die Blechpaketnuten erstrecken sich dabei entlang der axialen Abmessungen, und dienen zur Aufnahme einer Vielzahl dieser Leitelemente, wobei die Leitelemente einen elektrisch leitfähigen Kern und eine den leitfähigen Kern umhüllende Isolierung aufweisen. Die Leitelemente liegen dabei insbesondere in der Form von Formstäben vor. Die Vorrichtung umfasst zumindest ein Fixierelement geeignet zum Fixieren einer Vielzahl an Leitelementen gegen die Blechpaketnuten, wobei die Fixierung zumindest teilweise, insbesondere vollständig, entlang der axialen Abmessung des Blechpakets stattfindet. Dabei ermöglicht die Vorrichtung, zum Zweck einer Fixierung der Leitelemente, einen Toleranzausgleich von mindestens 0.1 mm und bis zu 1.5 mm, insbesondere von mindestens 0.2 mm bis zu 0.8 mm, ohne dass es dabei zu einer bleibenden plastischen Verformung des leitfähigen Kerns kommt. Der Toleranzausgleich wird dabei über eine elastische Längenänderung des Fixierelements bei einer mechanischen Beanspruchung in Längsrichtung der Blechpaketnuten ermöglicht, wobei die Bauteilsteifigkeit des Fixierelements so gewählt wird, dass die elastischen Längenänderungen zu keiner bleibenden Verformung des elektrisch leitfähigen Kerns führt oder der Toleranzausgleich wird über eine hydraulische Auslenkung des Fixierelements ermöglicht und die hydraulisch übertragene Kraft so gewählt, dass es zu keiner bleibenden plastischen Verformung des leitfähigen Kerns kommt.

Unter zeitweisem Fixieren ist dabei definitionsgemäß gemeint, dass es sich dabei nicht um eine permanente Fixierung handelt, sondern um eine zeitlich begrenzte Fixierung, beispielsweise über die Dauer des Herstellungsprozesses des Stators oder des Rotors, beziehungsweise auch über die Dauer dessen Transport oder sonstiger Manipulationen. Unter der axialen Abmessung des Blechpakets ist dabei definitionsgemäß die gesamte axiale Länge des Blechpakets gemeint.

Die Fixierung der Leitelemente durch die Fixierelemente findet dabei vorzugsweise zumindest teilweise, insbesondere vollständig, entlang der axialen Abmessung des Blechpakets statt. In besonderen Ausführungsformen können die Fixierelemente demnach die Leitelemente vollständig entlang der axialen Abmessungen des Blechpakets fixieren. Eine weitere besondere Ausführungsform ist, dass die Fixierelemente die Leitelemente entlang einer Teilstrecke der axialen Abmessungen des Blechpakets fixieren. Eine weitere besondere Ausführungsform ist, dass die Fixierelemente die Leitelemente ausschließlich innerhalb der axialen Abmessungen des Blechpakets fixieren, entweder entlang einer Teilstrecke der axialen Abmessung oder vollständig entlang der axialen Abmessung.

Eine vorteilhafte Ausgestaltung der Erfindung sieht vor, dass der Toleranzausgleich über eine elastische Längenänderung des Fixierelements bei einer mechanischen Beanspruchung in Längsrichtung der Blechpaketnuten ermöglicht wird. Dabei wird die Bauteilsteifigkeit des Fixierelements so gewählt, dass die elastischen Längenänderung zu keiner bleibenden Verformung des elektrisch leitfähigen Kerns führt. Dies hat den Vorteil, dass über die elastische Verformbarkeit der Fixierelemente unterschiedlicher Toleranzen in den jeweiligen Blechpaketnuten, e.g. bei den Leitelementen und/oder dem Blechpaket, ausgeglichen werden können, sodass alle Leitelemente über die jeweiligen Blechpaketnuten hinweg fixiert werden. Über die Wahl der Bauteilsteifigkeit können zudem die im Zuge des Toleranzausgleichs auf die Leitelemente einwirkenden Kräfte eingestellt werden, sodass eine Beschädigung der Leitelements, insbesondere eine plastische Verformung des elektrisch leitfähigen Kerns, vermieden wird.

Eine vorteilhafte Ausgestaltung der Erfindung sieht vor, dass die Bauteilsteifigkeit des Fixierelements über zumindest eine Ausnehmung und/oder Freistellung im Fixierelement eingestellt wird.

Eine vorteilhafte Ausführung ist dabei ein segmentierter Rahmen, wobei die Außensegmente des Rahmens über eine Rippenstruktur miteinander verbunden sind. Hierdurch kann auch bei Verwendung des gleichen Materials die Bauteilsteifigkeit des Fixierelements über das Design der Ausnehmungen und/oder Freistellungen modifiziert werden. Dies hat den Vorteil, dass darüber eine elastische Längenänderung des Fixierelements erreicht werden kann, die über jene herausgeht, die rein über die Werkstoffeigenschaften möglich wäre.

Eine vorteilhafte Ausgestaltung der Erfindung sieht vor, dass die Bauteilsteifigkeit des Fixierelements darüber eingestellt wird, dass zumindest ein Teil des Fixierelements aus einem elastischen Material besteht. Dies kann vorteilhafterweise ein Kunststoff sein, insbesondere ein Elastomer. Das hat den Vorteil, dass dadurch zusätzlich Qualitätseinbußen der Leitelemente, die direkt oder nur über ein Nutpapier mit den Fixierelementen in Kontakt sind, vermieden werden können.

Der Kunststoff kann dabei ausgewählt sein aus einer Gruppe umfassend bzw. bestehend aus Polyethylenterephthalat (PET), Polyethylen (PE), Polyetherketonen (PEK), Polyoxymethylen (POM), Polyamid (PA), PA 6, PA 66, PA 11, PA 12, PA 610, PA 612, Polyphenylensulfid (PPS), vernetzte Polyolefine, Polypropylen 10 A/87184-AT (PP), β-nukleiertes PP. Bei dem Kunststoff kann es sich dabei insbesondere auch um ein Elastomer handeln, ausgewählt aus einer Gruppe umfassend bzw. bestehend aus thermoplastischen Elastomeren wie z.B. thermoplastische Vulkanisate olefin-, amin-, esterbasierende, thermoplastische Polyurethane, thermoplastische Elastomere auf Ether-/Ester Basis, Styrol-Block-Copolymere, Silikonelastomere. Unter einem Kunststoff wird hier ein synthetisches oder natürliches Polymer verstanden wird, das aus entsprechenden Monomeren hergestellt ist. Es ist aber auch möglich, andere Kunststoffe, wie z.B. duroplastische Kunststoffe bzw. duroplastische Werkstoffe einzusetzen.

Eine weitere vorteilhafte Ausgestaltung der Erfindung sieht vor, dass das Fixierelement zum Zweck des Toleranzausgleichs bei einer mechanischen Beanspruchung in Längsrichtung der Blechpaketnuten über eine aufgebrachte Dehnung von minimal 0.3 % bis maximal 20%, insbesondere von 0.4% bis 4 %, rein elastisch verformbar ist.

Eine vorteilhafte Ausgestaltung der Erfindung sieht vor, dass der Toleranzausgleich über eine hydraulische Auslenkung des Fixierelements ermöglicht wird. Die hydraulisch übertragene Kraft wird dabei so gewählt, dass es zu keiner bleibenden plastischen Verformung des leitfähigen Kerns kommt.

Eine weitere vorteilhafte Ausgestaltung der Erfindung sieht vor, dass eine Vielzahl der Fixierelemente konzentrisch zueinander anordenbar sind. An den Fixierelementen ist dabei ein Rückstellelement anordenbar. Eine vorteilhafte Variante ist, dass das Rückstellelement an der Außenseite der Fixierelemente anordenbar ist. Es ist dabei insbesondere vorteilhaft, wenn das Rückstellelement aus einem Kunststoff besteht. Dies dient zur Realisierung einer Rückstellkraft, welche die Fixierelement bei Lösen der Fixierung beispielsweise wieder zur Ausgangsposition manipuliert.

Eine weitere vorteilhafte Ausgestaltung der Erfindung sieht vor, dass eine Vielzahl der Fixierelemente konzentrisch zueinander anordenbar sind. Dabei ergibt sich die Anzahl der Fixierelement über einen ganzzahligen Teiler aus der Anzahl der Blechpaketnuten ergibt, vorteilhafterweise entspricht der Teiler dabei 1.

Eine weitere vorteilhafte Ausgestaltung der Erfindung sieht vor, dass sie des Weiteren umfasst: Eine erste Nutenplatte und eine zweite Nutenplatte, wobei die Nuten der Nutenplatte dabei konzentrisch und in Längsrichtung der Blechpaketnuten nach außen verlaufen. Dabei ist ein Antriebselement zum Antreiben der Fixierelemente konzentrisch zwischen der ersten und zweiten Nutenplatte anordenbar. Ferner ist dabei umfänglich um das Antriebselement und in den Nuten der der ersten und zweiten Nutenplatte eine Vielzahl der Fixierelemente anordenbar. Dabei sind die Fixierelemente zur ersten und zweiten Nutenplatte verschiebbar angeordnet. Dies hat den Vorteil, dass durch diese Ausführungsform eine gleichmäßige, konzentrische Verschiebung der Fixierelemente durch das Antriebselement ermöglicht wird.

Eine vorteilhafte Ausgestaltung sieht hier vor, dass es sich bei dem Antriebselement um ein Hydraulikelement handelt.

Eine weitere vorteilhafte Ausgestaltung sieht vor, dass das Antriebselement umfasst: Ein Verbindungselement, das konzentrisch und senkrecht zur ersten und zweiten Nutenplatte anordenbar ist und zwischen diesen verläuft. Dabei ist zumindest ein erstes Verschiebungselement zum Zwecke des Verschiebens der Fixierelemente verschiebbar auf dem Verbindungselement anordenbar. Ferner ist ein Auslenkungselement zum Zweck des Auslenkens des Verschiebungselements am Verbindungselements anordenbar. Dabei weist das zumindest erste Verschiebungselement teilweise entlang des Umfangs in Richtung des Verbindungselements schräg verlaufende Flächen auf und umfänglich am zumindest ersten Verschiebungselement ist an dessen Schrägflachen eine Vielzahl der Fixierelemente anordenbar. Hierbei weisen die Fixierelemente eine dem zumindest ersten Verschiebungselement entsprechende Schrägfläche auf und sind und zur ersten und zweiten Nutenplatte verschiebbar angeordnet.

Eine weitere vorteilhafte Ausgestaltung der Erfindung sieht vor, zumindest eine erste Aufnahmeplatte an zumindest einer der Nutenplatten anordenbar ist. Die Aufnahmeplatte weist zumindest eine Ausnehmung zum Einsetzen eines Bolzenelements auf, wobei es sich dabei insbesondere eines Kugelsperrbolzens handeln kann.

Eine weitere vorteilhafte Ausgestaltung der Erfindung sieht vor, dass eine Schnittstelle, für ein zugehöriges zentrierendes Spannsystem, vorgesehen ist. Bei der Schnittstelle handelt es sich dabei vorteilhafterweise um ein Spannelement, insbesondere um einen Einzugsnippel oder einen Spannbolzen. Bei dem zentrierenden Spannsystem ist es vorteilhaft, wenn es sich um ein Nullpunktspannsystem handelt. Die Schnittstelle ist hierzu konzentrisch zu zumindest einer der Nutenplatten anordenbar. Dies hat den Vorteil, dass die Vorrichtung samt Blechpaket und fixierter Leitelemente unter Zuhilfenahme eines solchen Spannsystem mittels eines Automatisierungssystems platzsparend und ohne Einsatz von Außengreifern manipuliert werden kann.

Eine weitere vorteilhafte Ausgestaltung der Erfindung sieht vor, dass über eine Manipulation der Vorrichtung eine Manipulation des Blechpakets samt fixierter Leitelemente ermöglicht wird, indem es bei der Fixierung der Leitelemente zur Ausbildung eines Kraftschlusses kommt. Bei der Manipulation des Blechpakets samt fixierter Leitelemente soll es dabei zu keiner relativen, axialen Verschiebung der Leitelemente zum Blechpaket kommen. Dies wird beispielsweise über einen Kraftschluss zwischen den Fixierelementen, den Leitelementen und den Blechpaketnuten beziehungsweise dem Blechpaket erreicht. Bei Einsatz eines Nutpapiers, oder anderer dem Fachmann bekannten Elementen zur zusätzlichen Isolierung der Leitelemente gegenüber dem Blechpaket, wird der Kraftschluss beispielsweise zwischen den Fixierelementen, dem Nutpapier, oder anderen bekannten Isolationselementen, den Leitelemente und den Blechpaketnuten erreicht. Demnach würde es in diesem Verbund beispielsweise einen Kraftschluss zwischen Fixierelement zum Nutpapier, zwischen Nutpapier und den jeweils benachbart angeordneten Leitelementen, zwischen den Leitelementen untereinander und zwischen Nutpapier und der Blechpaketnut geben. Insbesondere gilt es dabei auch zu berücksichtigen, dass der Kraftschluss ohne eine bleibenden plastischen Verformung des leitfähigen Kerns der Leitelemente zustande kommt. Zur Manipulation der Vorrichtung selbst kann dazu noch ein Manipulationselement an der Vorrichtung angebracht werden. Beispiele dafür finden sich in den anderen vorteilhaften Ausgestaltungen, beispielsweise Schnittstellen für Spannsysteme oder Aufnahmeplatten mit Ausnehmungen zum Einsetzen von Bolzenelementen. Dies hat den Vorteil, dass so eine Manipulation des Blechpakets samt fixierter Leitelemente ohne Zuhilfenahme weiterer Vorrichtungen oder Vorrichtungselemente, wie beispielsweise eigener Halteelemente, möglich ist. Damit ist ein kompaktes und kostengünstiges Design der Vorrichtung möglich ist. Unter "ohne Zuhilfenahme weiterer Vorrichtungen oder Vorrichtungselemente" ist dabei definitionsgemäß gemeint, dass neben der erfindungsgemäßen Vorrichtung keine weiteren Vorrichtungen oder Elemente zum Halten des Blechpakets oder des Blechpakets samt Leiter, wie beispielsweise ein Dreibackfutter oder ein Außengreifer für das Blechpaket, benötigt werden.

Die Aufgabe wird ferner gelöst durch ein Verfahren zum Fixieren einer Vielzahl von Leitelementen einer Wicklung einer elektrodynamischen Maschine, insbesondere einer Radialflussmaschine, gegen ein Blechpaket eines Stators oder Rotors, wobei das Blechpaket Blechpaketnuten zur Aufnahme einer Vielzahl dieser Leitelemente und eine axiale Abmessung aufweist. Die Leitelemente besitzen hierbei einen elektrisch leitfähigen Kern und eine den leitfähigen Kern umhüllende Isolierung. Die Leitelementen können dabei insbesondere in der Form von Formstäben vorliegen. Unter Verwendung einer Vorrichtung nach Anspruch 1 weist das Verfahren dabei die folgenden Schritte auf:
- Bereitstellen eines Blechpakets eines Stators oder Rotors welches Blechpaketnuten zur Aufnahme von Leitelementen und eine axiale Abmessung aufweist, wobei die Blechpaketnuten mit einer Vielzahl von Leitelementen einer Wicklung einer elektrodynamischen Maschine bestückt sind.
- Positionieren der Vorrichtung im Innenraum des Blechpakets, sodass die Fixierelemente zu den Blechpaketnuten ausgerichtet sind und mit diesen in einer Flucht verlaufen.
- Auslenkung der Fixierelemente in Längsrichtung der Blechpaketnuten, sodass die Leitelemente gegen die Blechpaketnuten fixiert werden, wobei die Fixierung zumindest teilweise, insbesondere vollständig, entlang der axialen Abmessung des Blechpakets stattfindet.

Eine weitere vorteilhafte Verfahrensvariante kann zudem unter Verwendung einer Vorrichtung nach Anspruch 1 mit einer zusätzlich Schnittstelle, vorteilhafterweise ein Spannelement, insbesondere vorteilhafterweise einen Einzugsnippel oder einen Spannbolzen, für ein zugehöriges zentrierendes Spannsystem, einen weiteren Folgeschritt aufweisen:
- Über die vorgesehene Schnittstelle wird die Vorrichtung samt Blechpaket und fixierter Leitelemente, mittels Einsatzes eines zugehörigen zentrierenden Spannsystems und unter Zuhilfenahme eines Automatisierungssystems, manipuliert.

Diese Verfahrensvariante hat den Vorteil, dass die Vorrichtung hierzu auch zur prozesssicheren und platzsparenden Manipulation des Blechpakets samt fixierter Leitelemente zwischen den Fertigungsstationen genutzt werden kann.

Die Erfindung wird nachfolgend anhand von möglichen Ausführungsbeispielen in mehreren nicht-einschränkenden, schematischen Darstellungen erläutert.

### Hierin zeigen

Figur 1 zeigt eine schematische Darstellung des zu lösenden Problems.
Figur 2 zeigt schematisch eine mögliche Ausführungsform mittels elastisch verformbarer Fixierelemente.
Figur 3 zeigt schematisch eine möglichen Ausführungsform mittels hydraulischer Auslenkung der Fixierelemente.
Figur 4 zeigt eine mögliche Ausführungsform eines elastisch verformbaren Fixierelements.
Figur 5 zeigt eine weitere mögliche Ausführungsform eines Fixierelements, wobei ein Teil aus Kunststoff besteht.
Figur 6 zeigt eine mögliche Ausführungsform einer assemblierten Vorrichtung mit elastisch verformbaren Fixierelementen.
Figur 7 zeigt eine mögliche Ausführungsform einer assemblierten Vorrichtung mit einer an der Vorrichtung angeordneten Schnittstellen für ein zentrierendes Spannsystem.
Figur 8 zeigt eine weitere mögliche Ausführungsform einer assemblierten Vorrichtung mit einer an der Vorrichtung angeordneten Aufnahmeplatte, sowie Bolzenelementen, die in Ausnehmungen der Aufnahmeplatte eingesetzt wurden.
Figur 9 zeigt eine mögliche Ausführungsform einer assemblierten Vorrichtung mit zwei an der Vorrichtung angeordneten Schnittstellen, wobei die Vorrichtung beispielhaft in einen schematischen Stator eingesetzt wurde.
Figur 10 zeigt ein Automatisierungssystem zur Manipulation eines Stators mittels erfindungsgemäßer Vorrichtung.

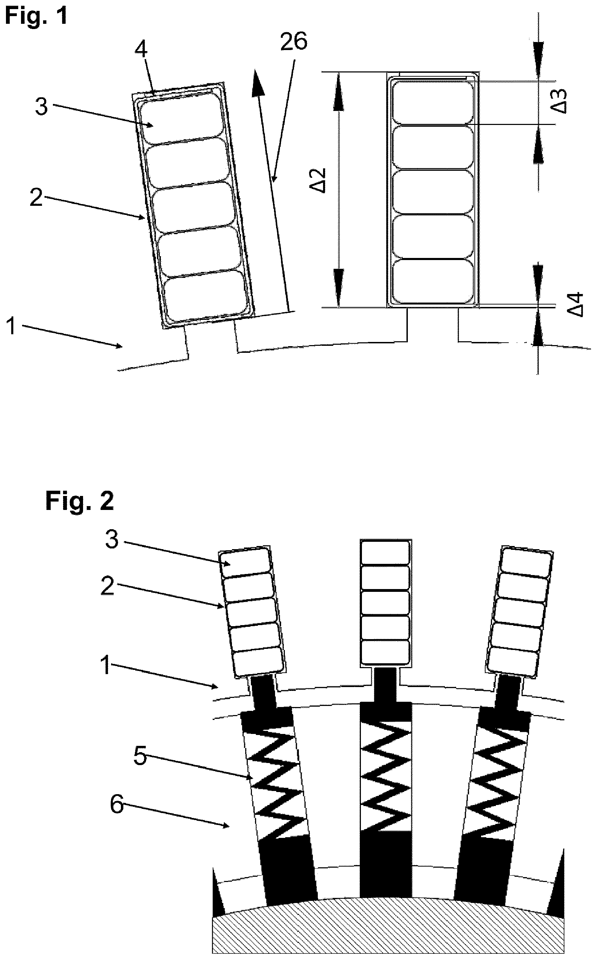

Figur 1 zeigt dabei schematisch einen Ausschnitt eines Blechpakets (1), wobei das Blechpaket (1) mit Blechpaketnuten (2) versehen ist, wobei in diesen Blechpaketnuten (2) beispielhaft Leitelemente (3) einer Wicklung einer elektrodynamischen Maschine angeordnet sind. Zusätzlich ist ein, die Leitelemente umschließendes, Nutpapier (4) vorhanden. Sowohl die Geometrie der Blechpaketnuten (Δ2), die Abmessung der Leitelemente (Δ3), als auch das Nutpapier (Δ4) sind dabei toleranzbehaftet, wobei für ein Fixieren der Leitelemente (3) in allen Blechpaketnuten (2), ohne dabei eine Beschädigung der Leitelemente (3) zu verursachen, insbesondere die Toleranzen in Längsrichtung der Blechpaketnuten (26) ausschlaggebend sind.

Figur 2 zeigt dabei schematisch einen Lösungsansatz für eine Fixierung der Leitelemente (3), wobei ein Toleranzausgleich in den jeweiligen Blechpaketnuten (2) über eine elastische Verformbarkeit der Fixierelements (5) erreicht wird. Die Fixierelemente (5) sind dabei durch das Vorhandensein einer Nutenplatte (6) geführt.

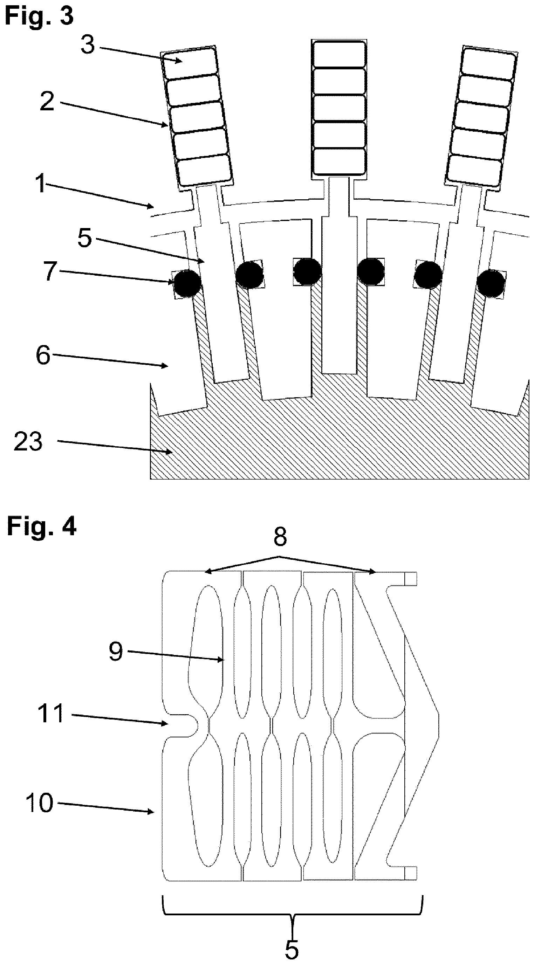

Figur 3 zeigt schematisch einen Lösungsansatz für eine Fixierung der Leitelemente (3), wobei der Toleranzausgleich über eine hydraulische Auslenkung der Fixierelemente (5) mittels eines hydraulischen Antriebselements (23) ermöglicht wird. Hierbei wird die hydraulisch übertragene Kraft so gewählt, dass es zu keiner bleibenden plastischen Verformung des leitfähigen Kerns kommt. Dabei sind zwischen den Fixierelementen (5) und der Nutenplatte (6) zusätzlich noch Dichtelemente (7) angeordnet.

Figur 4 zeigt eine mögliche Ausführungsform eines elastisch verformbaren Fixierelements (5), bei dem die Bauteilsteifigkeit konstruktiv eingestellt wurde, nämlich über eine Ausführung als segmentierter Rahmen (8), wobei die Außensegmente des Rahmens über eine Rippenstruktur (9) miteinander verbunden sind. An der den Leitelementen zugewandten Seite (10) ist dabei zusätzlich noch eine Ausnehmung (11) in das Fixierelement (5) eingebracht.

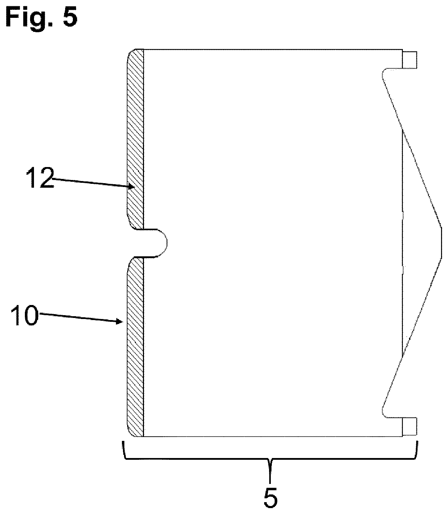

Figur 5 zeigt dabei eine mögliche Ausführungsform eines Fixierelements (5), bei dem die Bauteilsteifigkeit darüber eingestellt wurde, dass das Fixierelement (5) an der dem Leitelement zugewandten Seite (10) zum Teil aus einem Kunststoff (12) besteht.

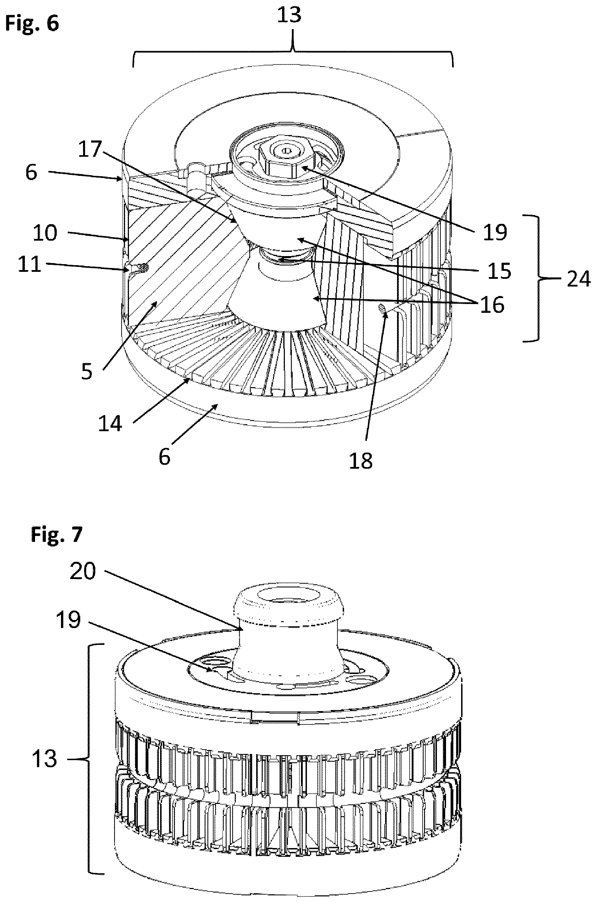

Figur 6 zeigt dabei eine mögliche Ausführungsform einer erfindungsgemäßen und vollständig assemblierten Vorrichtung (13). Die Vorrichtung (13) umfasst dabei zwei Nutenplatten (6) in denen Nuten (14) zur besseren Führung der Fixierelemente (5) vorgesehen sind, wobei in dieser möglichen Ausführungsform die Anzahl der Nuten (14) der Anzahl der Fixierelement (5) entspricht. Die beiden Nutenplatten (6) sind über ein Verbindungselement (15) verbunden sind, wobei eine denkbare Ausführungsform des Verbindungselements (15) eine Gewindespindel ist. An beiden Enden des Verbindungselements (15) ist dabei verschiebbar je ein Verschiebungselement (16) angeordnet. Eine denkbare Ausführungsvariante des Verschiebungselement (16) ist dabei eine Kegelmutter Umfänglich um die Verschiebungselemente (16) und in den Nuten (14) der Nutenplatten (6) sind dabei die Fixierelement (5) angeordnet, wobei die Fixierelemente (5) den Verschiebungselementen (16) entsprechende Schrägflächen (17) aufweisen. Dabei sind die Fixierelement (5) ebenfalls zur ersten und zweiten Nutenplatte (6) verschiebbar angeordnet. Die Außenseite der Nutenplatte (6) hat dabei eine Ausnehmung, wobei in diese Ausnehmungen ein Auslenkungselement (19) gelagert ist.

Das Auslenkungselement (19) kann in einer Ausführungsvariante dabei in das Verbindungselement (15) eingreifen, sodass über eine Rotation des Auslenkungselements (19) eine axiale Auslenkung entlang des Verbindungselements (15) zumindest eines Verschiebungselement (16) möglich ist. In einer Ausführungsvariante kann zudem in zumindest einem Verschiebungselement (16) auch eine Verdrehsicherung vorgesehen sein. Die Verschiebung der Fixierelement (5) geschieht in dem dargestellten Ausführungsbeispiel dabei über ein Auslenkungselement (19), insbesondere über eine Drehscheibe, welches ein Verschiebungselement (16) auslenkt, so dass die Fixierelemente (5) dann konzentrisch und in Längsrichtung der Blechpaketnuten (26) nach außen verschoben werden. Die Einheit aus Verbindungselement (15), Verschiebungselement (16) und Auslenkungselement (19) bilden in dieser Ausführungsform demnach das Antriebselement (24). An der den Leitelementen zugewandten Seite der Fixierelemente (10) befindet sich dabei eine Ausnehmung (11), sodass in die Gesamtheit aller Fixierelement (5) in diese Ausnehmungen (11) ein elastisches Ringelement (18) angeordnet werden kann.

Denkbar wären unter anderem Ausführungsvarianten mit nur einem Antriebselement. Möglich wären unter anderem jedoch auch eine Ausführungsvariante, in der zumindest ein Antriebselement über ein translatorisches Auslenkungselement ausgelenkt wird.

Figur 7 zeigt dabei eine mögliche Ausführungsform einer erfindungsgemäßen Vorrichtung (13) in der an einem Auslenkungselement (19) eine Schnittstelle (20) für ein zentrierendes Spannsystem, insbesondere ein Nullpunktspannsystem, angeordnet ist. Bei der Schnittstelle kann es sich dabei um ein Spannelement, wie beispielsweise einen Einzugsnippel oder einen Spannbolzen handeln.

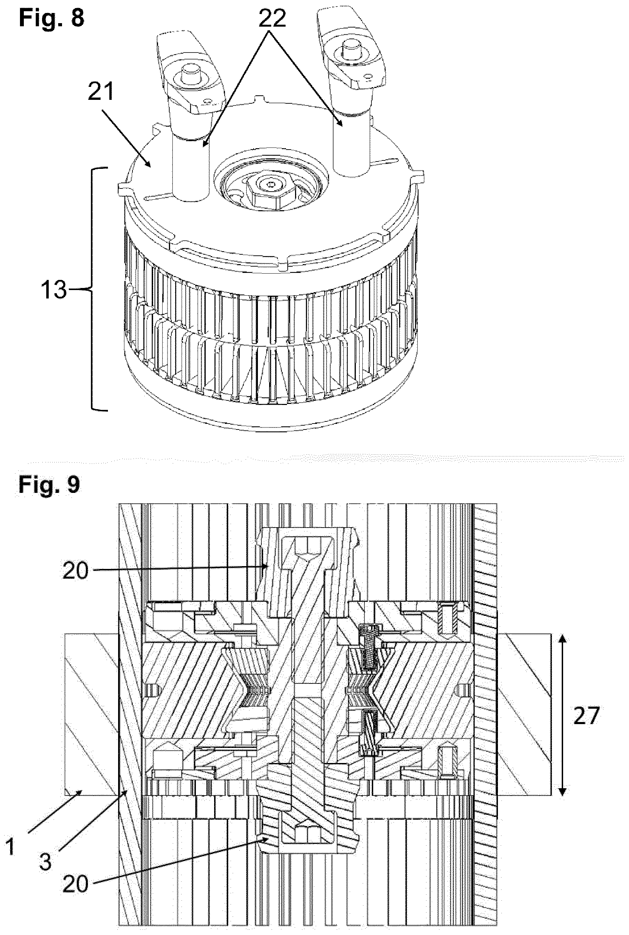

Figur 8 zeigt dabei eine mögliche Ausführungsform einer erfindungsgemäßen Vorrichtung (13), wobei an einer der Nutenplatten (6) zusätzlich noch eine Aufnahmeplatte (21) angeordnet ist, wobei in dieser Aufnahmeplatte (21) zwei Ausnehmungen vorhanden sind, sodass die Vorrichtung (13) über das Einsetzen von Bolzenelementen (22) manipulierbar ist. Bei dem Bolzenelement kann es sich beispielsweise um einen Kugelsperrbolzen handeln.

Figur 9 zeigt dabei eine mögliche Ausführungsform einer erfindungsgemäßen Vorrichtung (13), die beispielhaft in ein Blechpaket (1), mit einer axialen Abmessung (27) mit einer Vielzahl von Leitelementen (3), eingefügt wurde. Die mögliche Ausführungsform besitzt dabei beidseitig Schnittstellen (21) für ein für ein zentrierendes Spannsystem.

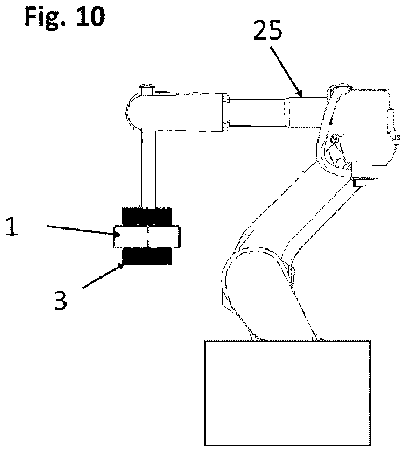

Figur 10 zeigt dabei ein Blechpaket (1) samt fixierter Leitelemente (3), dass mithilfe der erfindungsgemäßen Vorrichtung durch ein Automatisierungssystem (25) manipuliert wird.

| | |
|---|---|
| **1** | Blechpaket |
| **2** | Blechpaketnuten |
| **3** | Leitelemente |
| **4** | Nutpapier |
| **Δ2** | Toleranzen Blechpaketnut |
| **Δ3** | Toleranzen Leitelement |
| **Δ4** | Toleranzen Nutpapier |
| **5** | Fixierelemente |
| **6** | Nutenplatte |
| **7** | Dichtelemente |
| **8** | segmentierter Rahmen |
| **9** | Rippenstruktur |
| **10** | den Leitelementen zugwandte Seite des Fixierelements |
| **11** | Ausnehmung im Fixierelement |
| **12** | Kunststoffteil des Fixierelements |
| **13** | Assemblierte Vorrichtung |
| **14** | Nuten d. Nutenplatte |
| **15** | Verbindungselement |
| **16** | Verschiebungselement |
| **17** | Schrägflächen Fixierelemente |
| **18** | Elastisches Ringelement |
| **19** | Auslenkungselemente |
| **20** | Schnittstelle Spannsystem |
| **21** | Aufnahmeplatte |
| **22** | Bolzenelement |
| **23** | Hydraulisches Antriebselement |
| **24** | Antriebselement |
| **25** | Automatisierungssystem |
| **26** | Längsrichtung Blechpaketnut |
| **27** | Axiale Abmessung des Blechpakets |

## Patentansprüche

1. Vorrichtung zum zeitweisen Fixieren einer Vielzahl von Leitelementen einer Wicklung einer elektrodynamischen Maschine, insbesondere einer Radialflussmaschine, gegen ein Blechpaket eines Stators oder Rotors, wobei das Blechpaket eine axiale Abmessung und Blechpaketnuten, die sich entlang der axialen Abmessungen erstrecken, aufweist und wobei die Blechpaketnuten zur Aufnahme einer Vielzahl dieser Leitelemente dienen, wobei die Leitelemente einen elektrisch leitfähigen Kern und eine den leitfähigen Kern umhüllende Isolierung aufweisen, wobei die Leitelemente insbesondere in der Form von Formstäben vorliegen, umfassend zumindest ein Fixierelement geeignet zum Fixieren einer Vielzahl an Leitelementen gegen die Blechpaketnuten, wobei die Fixierung zumindest teilweise, insbesondere vollständig, entlang der axialen Abmessung des Blechpakets stattfindet und wobei die Vorrichtung zum Zweck einer Fixierung der Leitelemente einen Toleranzausgleich von mindestens 0.1 mm und bis zu 1.5 mm, insbesondere von mindestens 0.2 mm bis zu 0.8 mm, ermöglicht, ohne dass es dabei zu einer bleibenden plastischen Verformung des leitfähigen Kerns kommt, wobei der Toleranzausgleich über eine elastische Längenänderung des Fixierelements bei einer mechanischen Beanspruchung in Längsrichtung der Blechpaketnuten ermöglicht wird, wobei die Bauteilsteifigkeit des Fixierelements so gewählt wird, dass die elastischen Längenänderungen zu keiner bleibenden Verformung des elektrisch leitfähigen Kerns führt oder der Toleranzausgleich über eine hydraulische Auslenkung des Fixierelements ermöglicht wird und die hydraulisch übertragene Kraft so gewählt wird, dass es zu keiner bleibenden plastischen Verformung des leitfähigen Kerns kommt.

2. Vorrichtung nach Anspruch 1, **gekennzeichnet dadurch, dass** die Bauteilsteifigkeit des Fixierelements über zumindest eine Ausnehmung und/oder Freistellung im Fixierelement eingestellt wird, insbesondere vorteilhafterweise über eine Ausführung als segmentierter Rahmen, wobei die Außensegmente des Rahmens über eine Rippenstruktur miteinander verbunden sind.

3. Vorrichtung nach Anspruch 1 oder 2, **gekennzeichnet dadurch, dass** die Bauteilsteifigkeit des Fixierelements darüber eingestellt wird, dass zumindest ein Teil des Fixierelements aus einem elastischen Material besteht, vorteilhafterweise einem Kunststoff, insbesondere vorteilhafterweise einem Elastomer.

4. Vorrichtung nach einem oder mehreren der vorhergehenden Ansprüche, **gekennzeichnet dadurch, dass** das Fixierelement zum Zweck des Toleranzausgleichs bei einer mechanischen Beanspruchung in Längsrichtung der Blechpaketnuten über eine aufgebrachte Dehnung von minimal 0.3 % bis maximal 20%, insbesondere von 0.4% bis 4 %, rein elastisch verformbar ist.

5. Vorrichtung nach einem oder mehreren der vorhergehenden Ansprüche, **gekennzeichnet dadurch, dass** eine Vielzahl der Fixierelemente konzentrisch zueinander anordenbar sind und wobei an den Fixierelementen ein Rückstellelement anordenbar ist und wobei das Rückstellelement vorteilhafterweise an der Außenseite der Fixierelemente anordenbar ist und wobei das Rückstellelement insbesondere vorteilhafterweise aus einem Kunststoff besteht.

6. Vorrichtung nach einem oder mehreren der vorhergehenden Ansprüche, **gekennzeichnet dadurch, dass** eine Vielzahl der Fixierelemente konzentrisch zueinander anordenbar sind und wobei sich die Anzahl der Fixierelement über einen ganzzahligen Teiler aus der Anzahl der Blechpaketnuten ergibt, vorteilhafterweise entspricht der Teiler dabei 1.

7. Vorrichtung nach einem oder mehreren der vorhergehenden Ansprüche, **dadurch gekennzeichnet, dass** sie des Weiteren umfasst, eine erste Nutenplatte und eine zweite Nutenplatte, wobei die Nuten konzentrisch und in Längsrichtung der Blechpaketnuten nach außen verlaufen, wobei ein Antriebselement zum Antreiben der Fixierelemente konzentrisch zwischen der ersten und zweiten Nutenplatte anordenbar ist, wobei umfänglich um das Antriebselement und in den Nuten der der ersten und zweiten Nutenplatte eine Vielzahl der Fixierelemente anordenbar ist, wobei die Fixierelemente zur ersten und zweiten Nutenplatte verschiebbar angeordnet sind.

8. Vorrichtung nach Anspruch 7, wobei es sich bei dem Antriebselement um ein Hydraulikelement handelt.

9. Vorrichtung nach Anspruch 7, **dadurch gekennzeichnet, dass** das Antriebselement folgendes umfasst, ein Verbindungselement, das konzentrisch und senkrecht zur ersten und zweiten Nutenplatte anordenbar ist und zwischen diesen verläuft, wobei zumindest ein erstes Verschiebungselement zum Zwecke des Verschiebens der Fixierelemente verschiebbar auf dem Verbindungselement anordenbar ist, wobei ein Auslenkungselement zum Zweck des Auslenkens des Verschiebungselements am Verbindungselements anordenbar ist, wobei das zumindest erste Verschiebungselements teilweise entlang des Umfangs in Richtung des Verbindungselements schräg verlaufende Flächen aufweist, wobei umfänglich am zumindest ersten Verschiebungselements an dessen Schrägflachen eine Vielzahl der Fixierelemente anordenbar ist, wobei die Fixierelemente eine dem zumindest ersten Verschiebungselements entsprechende Schrägfläche aufweisen.

10. Vorrichtung nach einem oder mehreren der Ansprüche 7-9, **dadurch gekennzeichnet, dass** zumindest eine erste Aufnahmeplatte mit zumindest einer Ausnehmung zum Einsetzen eines Bolzenelements, insbesondere eines Kugelsperrbolzens, vorgesehen ist, wobei die zumindest erste Aufnahmeplatte an zumindest einer der Nutenplatten anordenbar ist.

11. Vorrichtung nach einem oder mehreren der Ansprüche 7-9, **dadurch gekennzeichnet, dass** eine Schnittstelle, vorteilhafterweise ein Spannelement, insbesondere vorteilhafterweise einen Einzugsnippel oder einen Spannbolzen, für ein zugehöriges zentrierendes Spannsystem, insbesondere ein Nullpunktspannsystem, vorgesehen ist, wobei die Schnittstelle konzentrisch zur zumindest einer der Nutenplatte anordenbar ist.

12. Vorrichtung nach einem oder mehreren der vorhergehenden Ansprüche **dadurch gekennzeichnet, dass** über eine Manipulation der Vorrichtung eine Manipulation des Blechpakets samt fixierter Leitelemente ermöglicht wird, indem es bei der Fixierung der Leitelemente zur Ausbildung eines Kraftschlusses kommt.

13. Verfahren zum Fixieren einer Vielzahl von Leitelementen einer Wicklung einer elektrodynamischen Maschine, unter Verwendung einer Vorrichtung nach Anspruch 1, das folgende Schritte umfasst:
• Bereitstellen eines Blechpakets eines Stators oder Rotors welches Blechpaketnuten zur Aufnahme von Leitelementen und eine axiale Abmessung aufweist, wobei die Blechpaketnuten mit einer Vielzahl von Leitelementen einer Wicklung einer elektrodynamischen Maschine bestückt sind.
• Positionieren der Vorrichtung im Innenraum des Blechpakets, sodass die Fixierelemente zu den Blechpaketnuten ausgerichtet sind und mit diesen in einer Flucht verlaufen.
• Auslenkung der Fixierelemente in Längsrichtung der Blechpaketnuten, sodass die Leitelemente gegen die Blechpaketnuten fixiert werden, wobei die Fixierung zumindest teilweise, insbesondere vollständig, entlang der axialen Abmessung des Blechpakets stattfindet.

14. **Verfahren** nach Anspruch 13, wobei die Vorrichtung zusätzlich eine Schnittstelle, vorteilhafterweise ein Spannelement, insbesondere vorteilhafterweise einen Einzugsnippel oder einen Spannbolzen, für ein zugehöriges zentrierendes Spannsystem vorsieht, wobei das Verfahren einen weiteren Folgeschritt aufweist:
• Über die vorgesehene Schnittstelle wird die Vorrichtung samt Blechpaket und fixierter Leitelemente, mittels Einsatzes eines zugehörigen zentrierenden Spannsystems und unter Zuhilfenahme eines Automatisierungssystems, manipuliert.
